(19) Europäisches Patentamt
European Patent Office
Office européen des brevets

(11) **EP 4 749 571 A1**

(12) **EUROPEAN PATENT APPLICATION**

(43) Date of publication:
**27.05.2026 Bulletin 2026/22**

(21) Application number: **24425054.4**

(22) Date of filing: **22.11.2024**

(51) International Patent Classification (IPC):
***G06T 7/254*** (2017.01)

(52) Cooperative Patent Classification (CPC):
**G06T 7/254;** G06T 2207/20032; G06T 2207/20081;
G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Luxottica S.r.l.**
**32021 Agordo (BL) (IT)**

(72) Inventors:
• **Bartoli, Pietro**
**20133 Milano (MI) (IT)**

• **Giudici, Andrea**
**20133 Milano (MI) (IT)**
• **Ongarello, Tommaso**
**32021 Agordo (BL) (IT)**
• **Palermo, Francesca**
**32021 Agordo (BL) (IT)**
• **Trojaniello, Diana**
**32021 Agordo (BL) (IT)**
• **Zappa, Franco**
**20133 Milano (MI) (IT)**

(74) Representative: **Biallo, Dario et al**
**Barzanò & Zanardo S.p.A.**
**Via Borgonuovo, 10**
**20121 Milano (IT)**

(54) **WEARABLE SENSORY DEVICE FOR REAL-TIME IMAGE PROCESSING**

(57) Method (1000) to operate a wearable sensory device for real-time image processing,
wherein said sensory device comprises an image detector (100) and a Neural Processing Unit (NPU),
wherein said image detector (100) takes at least two consecutive images (201, 202), a first image (201) and a second image (202),
wherein the method (1000) is performed by NPU and comprises an algorithm design phase (1200) comprising an acquiring operation (1201), wherein said acquiring operation (1201) acquires said at least two consecutive images (201, 202),
a subtracting operation (1202) which subtracts the first image (201) from the second image (202) and obtains a differential image,
a POSITIVE PATH operation (1210) which reconstructs a positive event-like image (32) from said differential image,
a NEGATIVE PATH operation (1220) which reconstructs a negative event-like image (31) from said differential image,
an addition operation (1230) which adds said negative event-like image (31) to positive event-like image (32) obtaining an event-like image.

Fig. 7

**Description**

The present invention relates to a wearable sensory device for real-time image processing.

In the current state of the art, sensory devices used for real-time processing of huge amounts of data are known, but they have a great energy footprint.

Performance and resolution of a result of said sensory devices for real-time image processing may be poor.

Disadvantageously the real-time sensory devices are much slower in processing and elaborating said huge quantity of data.

When said real-time sensory devices are transportable and/or wearable, they cannot be used for too long because their batteries must be small to be wearable and/or transportable, and they are limited in terms of memory resources and computing power.

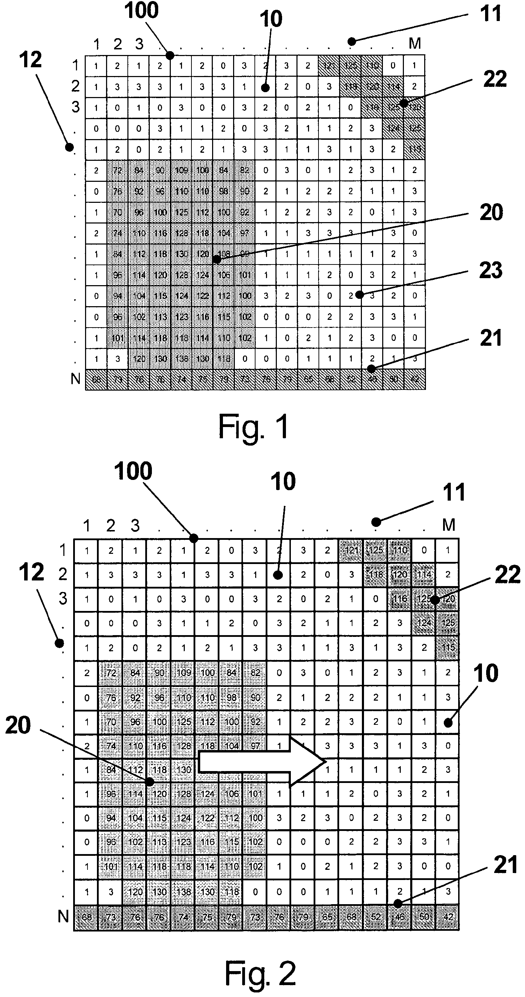

As shown in figure 1 in the current state of the art, sensory devices are for example monochrome cameras comprising image detectors 100 comprising M columns 11 and N rows 12 of a multiplicity of pixels 10 representing a frame. A prior art central processing unit (CPU) of the sensory device reads these image detectors 100 frame by frame during an interval of time, at a speed measured in frames per second (fps).

In figure 1 an example image shows a scene comprising a cup 20 placed on a table 21 and a stick 22 at right top, and inhomogeneous background 23, wherein each pixel 10 contains a number value representing for example light intensity of said scene at that point encoded for example in an unsigned byte of 8 bits, therefore contained between 0 and 255.

In the current state of the art, sensory devices are also for example RGB (Red Green Blue) colour cameras.

Furthermore, in the current state of the art, sensory devices are for example cameras called event cameras, since they do not produce data at a fixed frequency of frames (*fps*), but each pixel generates an event when a change in brightness occurs.

This allows to create asynchronous data, independent of any other pixels, in the form $(t_i, x_i, y_i, P_i)$, where $t_i$ is the time when the *i*-th event occurs, $x_i$ and $y_i$ are the coordinates of the activated pixel, and $P_i$ is the polarity of the event, which can be 1 (if the brightness value has increased) or 0 (if the brightness value has decreased). The event camera therefore does not produce a real image, but a stream of events, whose temporal resolution can reach the microsecond ($\mu s$) and even better. One method for reconstructing an image from events consists in accumulating the events collected within a given period of time, thus recreating an image in which each value of 1 indicates a positive event and each value of -1 indicates a negative event, referred to the pixel with coordinates (*x,y*) which detected an event, while 0 represents an absence of any kind of event, i.e. referred to pixels which detected no event.

The combination of an event-based image and the corresponding frame from a frame-based camera has been shown to be useful for image deblurring and for improving the accuracy of Artificial Intelligence (AI) when there are moving objects in the image. However, synchronization between the two sensors (frame-based and event-based) is a non-trivial problem due to the different temporal nature of the two outputs (synchronous and asynchronous).

By making the difference between a frame and the previous one represented in figures 2 and 3 and spaced by 1/*fps* seconds, a differential image is obtained, shown in figure 4.

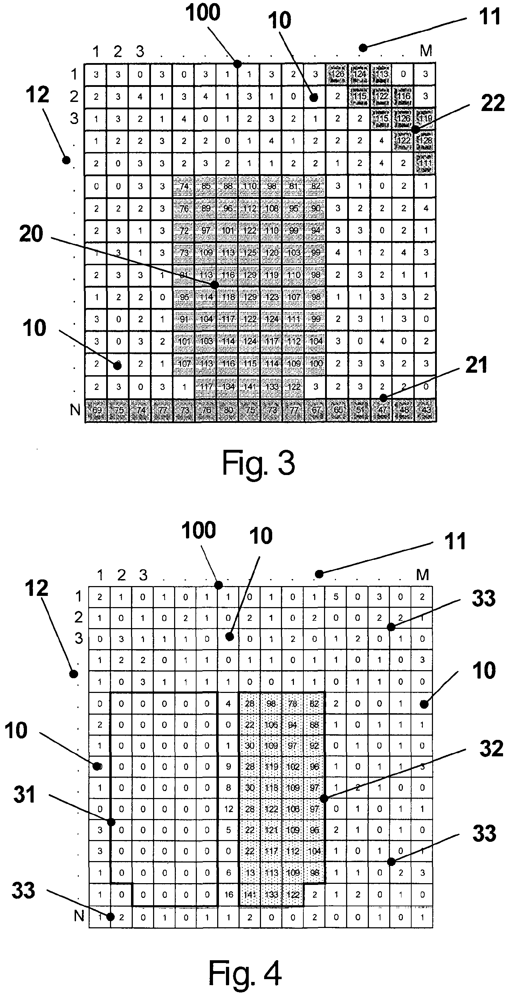

In figure 4, moving objects generate distinct areas containing either positive events (increasing intensity) 32 or negative events (decreasing intensity) 31, while stationary objects largely vanish, resulting in areas with nearly zero events (unchanged intensity) differences 33.

However, stationary objects do not completely disappear, as successive frames (Figures 2 and 3) can exhibit minor variations due to noise from electronic measurement devices, changes in illumination conditions, or fluctuations in photon counts that follow Poisson statistics, which can cause differences between frames.

In figure 4, negative events 31 do not result to negative values because the unsigned arithmetic of the processor truncates negative values to zero.

Positive events 32 indicate that the objects in the images are moving along a direction (represented as a white arrow in figure 2).

In the real world, there will still be some intensity fluctuations as already indicated in figure 1 and highlighted in the two consecutive frames in figures 2 and 3; therefore also the differential image will have non-null contents even where there is no moving object 33 as shown in figure 4.

As already said, in the case where the data for each pixel is encoded in 8 bits without a sign bit (for example an unsigned *int8*), a null value is used even when the difference is negative. This makes it impossible to reconstruct either an event-like image or a frame-based image from the differential image alone.

For the reconstruction of positive events 32, it is possible to first select a certain threshold TH, so that a positive event 32 is considered real and not due to noise, if it is greater than TH. To further mitigate the background noise, a median filter can be used. This type of filter is particularly effective when the background noise is sparse and random, as in this case. Applying the median filter after applying the first threshold is a functional method for the reconstruction of positive events 32. In the case where it is possible to use variables for the pixels with the sign information, the same method can be used for the reconstruction of negative events 31 (which indicate the direction from which the object is moving away).

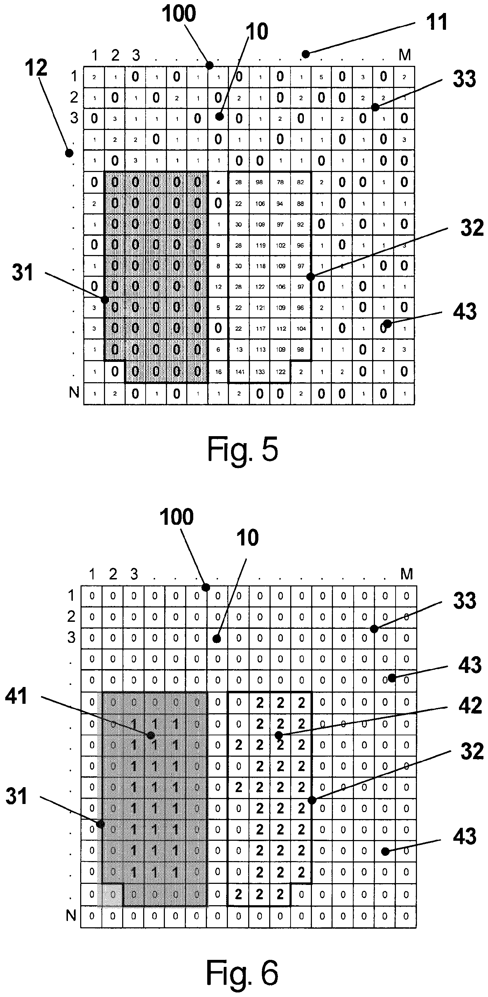

When the data does not have a sign bit, for the reconstruction of negative events 31, a different approach is needed. The main problem is that there will be null values both in the areas where we need to reconstruct the negative events 31, and randomly in the background 33, in the case where the pixel value has not changed or it has decreased, as highlighted in figure 5. The only way to distinguish these two types of null values is their concentration in space: in fact, they will be concentrated where there should be a negative event 31 and will be scattered in the other case, as shown in figure 5. For example when the zeros are close together and there is a very clear difference between one frame and another, then an object has moved, and therefore the count has very high differences between the previous frame and the next one.

It is possible to impose a number with which to label each pixel 10 of figure 6, for example 2 if the pixel 10 in the differential image has undergone an increase in signal intensity, such as the area of pixels 10 labelled as 42, or 1 if the pixel 10 in the differential image has undergone a decrease in signal intensity, such as the area of pixels 10 labelled as 41, and 0 in all other cases, lie the areas of pixels 10 labelled as 43, in this way it is possible to understand in which direction an object is moving.

All the operation described above are done by a CPU in prior art. CPU operates in a sequential way.

For wearable products, it is crucial to minimize the number and weight of electronic components, such as memory units, microcontrollers, and heat sinks, to also reduce the overall space required.

In wearable products, it is essential to reduce energy consumption and the complexity of mathematical operations, optimizing processing speed and maintaining high accuracy.

Disadvantageously many sensory devices of the prior art, such as smart eyewear, may require the use of both RGB cameras (to take high-resolution photographs and videos) and event cameras (to recognize object movements). However, using two separate cameras increases costs and energy consumption. Equally important, in situations characterized by particularly fast scene dynamics, a very high number of events may be generated, producing a significantly higher volume of data than a normal frame-based camera. Furthermore, synchronization between the two sensors can be achieved via Field Programmable Gate Array (FPGA) or via software. In the first case, this increases energy consumption and the physical size of the device, while in the second case it requires the execution of complex computational operations by the CPU, increasing the execution time.

An object of the present invention is to provide an method to operate a sensory device that is more efficient, reduces average current consumption, increases data processing speed, reduces computational operations by a processing unit, decreases weight of the sensory device to be wearable, and reduces the occupied space.

According to the invention, this other object is achieved by an method according to claim 1.

Another object of the present invention is to provide a sensory device that is more efficient, reduces average current consumption, increases data processing speed, reduces computational operations by a processing unit, decreases weight of the sensory device to be wearable and reduces the space occupied.

According to the invention, this other object is achieved by a wearable sensory device according to claim 7.

Yet another object of the present invention is to provide a head mounted device suitable to mount a sensory device that is more efficient, reduces average current consumption, increases data processing speed, reduces computational operations by a processing unit, decreases weight of the sensory device to be wearable and reduces the space occupied.

According to the invention, this yet another object is achieved by a head mounted device according to claim 13.

In a first aspect, the invention relates to an method to operate a wearable sensory device for real-time image processing.

Said sensory device comprises an image detector and a Neural Processing Unit (NPU).

Said image detector takes at least two consecutive images, a first image and a second image.

NPU performs the method.

The method comprises an algorithm design phase.

Said algorithm design phase comprises an acquiring operation.

Said acquiring operation acquires said at least two consecutive images.

NPU reads said at least two consecutive images in parallel way.

The algorithm design phase comprises a subtracting operation which subtracts the first image from the second image and obtains a differential image, wherein NPU applies the subtracting operation in parallel way.

The algorithm design phase comprises a POSITIVE PATH operation which reconstructs a positive event-like image from said differential image.

The algorithm design phase comprises a NEGATIVE PATH operation (1220) which reconstructs a negative event-like image (31) from said differential image.

NPU operates POSITIVE PATH operation in parallel way.

NPU operates NEGATIVE PATH operation in parallel way.

The algorithm design phase comprises an addition operation which adds said negative event-like image to positive event-like image obtaining an event-like image, wherein NPU performs the adding operation in parallel way.

The algorithm design phase may comprise a concatenate operation which concatenates said event-like image with the second image and obtaining a result image which comprises in at least one channel the event-like information and in the at least one other channel the image information.

Said image detector may be only one.

Said NPU may perform steps of said algorithm design phase inside a neural network environment.

Said image detector may be a monochrome camera.

Said image detector may be an RGB colour camera.

Said image detector may be a depth camera.

Said image detector may be a Time of Flight camera.

Said image detector may be a thermal camera.

Said POSITIVE PATH operation may comprise a binarization operation wherein said differential image is binarized by assigning a value of 1 to pixels 10 of said image detector with an event whose value is above a threshold THpos and 0 otherwise, generating a binarized positive differential image, wherein said NPU applies the binarization operation to the pixels in parallel way.

Convolution and threshold operations provide that said binarized positive differential image may be convolved by NPU by applying a median filter in a parallel way generating a convolved positive differential image.

Then said convolved positive differential image may be binarized by NPU by assigning a value of 1 to pixels with an event whose value is above a threshold bond with the dimensions of the kernel and 0 otherwise, generating a binarized convolved positive differential image.

Said NEGATIVE PATH operation may comprise a binarization operation wherein said differential image is binarized by keeping a value of 0 to pixels with an event whose value is 0 and 1 otherwise, generating a binarized negative differential image, wherein said NPU applies the binarization operation to said differential image in parallel way.

Convolution and threshold operations provide that said binarized negative differential image may be convolved by NPU by applying the same kernel matrix of POSITIVE PATH operation in a parallel way generating a convolved negative differential image.

Then said convolved negative differential image may be binarized by NPU by assigning a value of 0 to pixels with an event whose value is below a threshold THneg bond with the dimensions of the kernel and 1 otherwise, generating a binarized convolved negative differential image.

In a second aspect, said invention relates to a wearable sensory device for real-time image processing.

Said sensory device comprises an image detector and a Neural Processing Unit (NPU), wherein NPU is adapted to perform method for operating a wearable sensory device for real-time image processing.

Said image detector is adapted to take at least two consecutive images, a first image and a second image.

Said sensory device is adapted to obtain an event-like image.

Said sensory device may comprise an image detector and a Neural Processing Unit (NPU).

Said image detector may take at least two consecutive images, a first image and a second image.

NPU may perform the method.

The method comprises an algorithm design phase.

Said NPU is adapted to perform an acquiring operation of the algorithm design phase wherein said NPU acquires said at least two consecutive images.

Said NPU is adapted to perform a subtracting operation wherein said NPU subtracts the first image from the second image and obtains a differential image.

Said NPU is adapted to perform a POSITIVE PATH operation wherein said NPU reconstructs a positive event-like image from said differential image.

Said NPU is adapted to perform a NEGATIVE PATH operation wherein said NPU reconstructs a negative event-like image from said differential image.

Said NPU is adapted to perform an addition operation wherein said NPU adds said negative event-like image to positive event-like image obtaining an event-like image.

Said NPU may be adapted to perform a concatenate operation wherein said NPU concatenates said event-like image with the second image and obtaining a result image which comprises in at least one channel the event-like information and in the at least one other channel the image information.

Said image detector may be only one.

Said NPU may perform steps of said algorithm design phase inside a neural network environment.

Said image detector may be a monochrome camera.

Said image detector may be an RGB colour camera.

Said image detector may be a depth camera.

Said image detector may be a Time of Flight camera.

Said image detector may be a thermal camera

Said NPU may be adapted to perform a binarization operation of said POSITIVE PATH operation wherein NPU binarizes said differential image by assigning a value of 1 to pixels 10 of said image detector with an event whose value is above a threshold THpos and 0 otherwise, generating a binarized positive differential image.

Said NPU may be adapted to perform a convolution and threshold operations of said POSITIVE PATH operation wherein said NPU convolves said binarized positive differential image by applying a median filter generating a convolved positive differential image.

Said NPU may binarize said convolved positive differential image by assigning a value of 1 to pixels with an event whose value is above a threshold bond with the dimensions of the kernel and 0 otherwise, generating a binarized convolved positive differential image.

Said NPU may be adapted to perform a binarization operation of said NEGATIVE PATH operation, wherein said NPU binarizes said differential image by keeping a value of 0 to pixels with an event whose value is 0 and 1 otherwise, generating a binarized negative differential image, wherein said NPU applies the binarization operation to said differential image in parallel way.

Said NPU may be adapted to perform a convolution and threshold operations of said NEGATIVE PATH operation, wherein said NPU convolves said binarized negative differential image by applying the same kernel matrix of POSITIVE PATH operation in a parallel way generating a convolved negative differential image.

Said NPU may binarize said convolved negative differential image by assigning a value of 0 to pixels with an event whose value is below a threshold THneg bond with the dimensions of the kernel and 1 otherwise, generating a binarized convolved negative differential image.

In a third aspect, the invention relates to a head mounted device suitable to mount a wearable sensory device for real-time image processing.

Said sensory device comprises an image detector and a Neural Processing Unit (NPU).

NPU is adapted to perform a method for operating a wearable sensory device for real-time image processing comprising an algorithm design phase.

Said image detector is adapted to take at least two consecutive images, a first image and a second image.

Said NPU is adapted to perform an acquiring operation of the algorithm design phase wherein said NPU acquires said at least two consecutive images.

Said NPU is adapted to perform a subtracting operation wherein said NPU subtracts the first image from the second image and obtains a differential image.

Said NPU is adapted to perform a POSITIVE PATH operation wherein said NPU reconstructs a positive event-like image from said differential image.

Said NPU is adapted to perform a NEGATIVE PATH operation wherein said NPU reconstructs a negative event-like image from said differential image.

Said NPU is adapted to perform an addition operation wherein said NPU adds said negative event-like image to positive event-like image obtaining an event-like image.

Said NPU may be adapted to perform a concatenate operation wherein said NPU concatenates said event-like image with the second image and obtaining a result image which comprises in at least one channel the event-like information and in the at least one other channel the image information.

Said image detector may be only one.

Said NPU may perform steps of said algorithm design phase inside a neural network environment.

Said image detector may be a monochrome camera.

Said image detector may be an RGB colour camera.

Said image detector may be a depth camera.

Said image detector may be a Time of Flight camera.

Said image detector may be a thermal camera

Said NPU may be adapted to perform a binarization operation of said POSITIVE PATH operation wherein NPU binarizes said differential image by assigning a value of 1 to pixels 10 of said image detector with an event whose value is above a threshold THpos and 0 otherwise, generating a binarized positive differential image.

Said NPU may be adapted to perform a convolution and threshold operations of said POSITIVE PATH operation wherein said NPU convolves said binarized positive differential image by applying a median filter generating a convolved positive differential image.

Said NPU may binarize said convolved positive differential image by assigning a value of 1 to pixels with an event whose value is above a threshold bond with the dimensions of the kernel and 0 otherwise, generating a binarized convolved positive differential image.

Said NPU may be adapted to perform a binarization operation of said NEGATIVE PATH operation, wherein said NPU binarizes said differential image by keeping a value of 0 to pixels with an event whose value is 0 and 1 otherwise, generating a binarized negative differential image, wherein said NPU applies the binarization operation to said differential image in parallel way.

Said NPU may be adapted to perform a convolution and threshold operations of said NEGATIVE PATH operation, wherein said NPU convolves said binarized negative differential image by applying the same kernel matrix of POSITIVE PATH operation in a parallel way generating a convolved negative differential image.

Said NPU may binarize said convolved negative differential image by assigning a value of 0 to pixels with an event whose value is below a threshold THneg bond with the dimensions of the kernel and 1 otherwise, generating a binarized convolved negative differential image.

Other characteristics are provided in the dependent claims.

The characteristics and the advantages of the present invention will become more evident from the following description, which is exemplary and not limiting, with reference to the appended schematic drawings, in which:

figure 1 is a view of M columns by N rows of a multiplicity of pixels of an image detector of a sensory device, wherein the image detector is a monochrome camera for example, wherein an example image shows a scene comprising a cup placed on a table and a stick at right top and inhomogeneous background, wherein each pixel contains a number representing for example light intensity of said scene at that point encoded for example in a byte of 8 bits, therefore ranging between 0 and 255, note how background has some fluctuations in the pixel value;

figure 2 is a view of M columns by N rows of a multiplicity of pixels of an image detector of another sensory device according to prior art, wherein the frame is acquired at a first time T1 and the scene represents the cup that is moving from left to right, as highlighted by a white arrow, while the stick and the table remain still, wherein each pixel contains a number representing for example a value of light intensity of said scene at that point encoded for example in a byte of 8 bits, therefore ranging between 0 and 255;

figure 3 shown the same of figure 2 but at a second time T2 wherein the cup has moved from left to the right of the frame. Note the small variations in brightness in the two images, which create differences even where there is no movement;

figure 4 is a differential image calculated as a subtraction of figure 2 at T1 from figure 3 at T2. Negative values are rendered as zero due to the nature of the unsigned data;

figure 5 is a raw differential image with number values identical to that of figure 4, wherein values highlighted in larger bold font are the zeros. Note that the only way to verify that the zeros belong to the events with negative polarity is their concentration, i.e. spatial aggregation or spatial density;

figure 6 is a differential image, wherein the values highlighted in larger bold font are those positive (on the right hand side labelled as 2) and negative (on the left hand side labelled as 1);

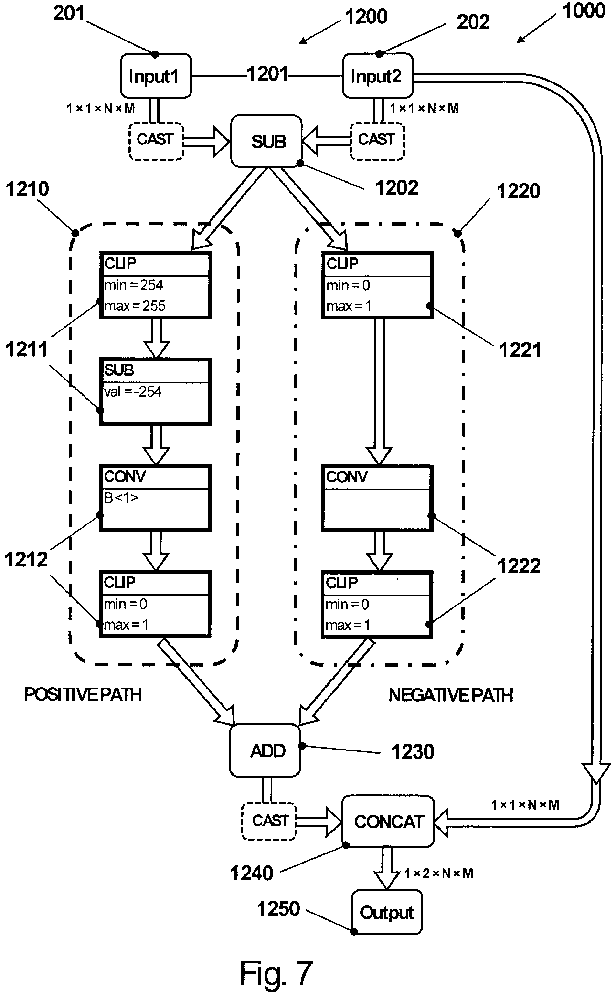

figure 7 is a schematic flow chart of an method for operating a wearable sensory device of the present invention comprising an algorithm design phase; $1\times1\times N\times M$ represents the input data size, corresponding to image of 1 channel (e.g. greyscale) of an array of N by M pixels; $1\times2\times N\times M$ represents the output data size, corresponding to 1 image of 2 channels (e.g. the greyscale image and the event-driven reconstructed map) of an array of N by M pixels.

With reference to figure 1 a sensory device comprises an image detector 100, which is for example a monochrome camera comprising M columns 11 and N rows 12 of a multiplicity of pixels 10.

Each pixel 10 of said multiplicity of pixels 10 comprises a value, wherein said value can be a value representing a light intensity of a scene at that point viewed from the angle of view of the pixel 10 of the image detector 100.

The multiplicity of pixels 10 represents a huge amount of data.

The light intensity of said pixel 10 is encoded for example in a byte of 8 bits, therefore ranging values between 0 and 255.

In figure 1 an example is shown of an image with three objects: a cup 20, a table 21, a stick 22 and a background area 23.

Alternatively the image detector 100 is an RGB colour camera (not shown in the figures), wherein each pixel 10 of the image detector 100 is composed of, for example, 3 bytes (one for the intensity of each colour, Red, Green and Blue, at that point in the image).

The sensory device according to the present invention comprises a single image detector 100 i.e. a monochrome camera as shown in figure 1 or alternatively a single RGB colour camera, and - as shown in figure 4 - a differential signal processing to emulate an event camera, so to detect both negative events 31 and positive events 32 of moving objects, while fixed objects 33 almost disappear.

Our approach runs an operating process which is a method 1000 to operate a wearable sensory device for real-time image processing in a *Neural Processing Unit* (NPU), i.e. NPU performs the method 1000, reducing power consumption, and increasing the speed of the method 1000.

Alternatively the wearable sensory device comprises also a Central Processing Unit (CPU), but NPU performs the method 1000, thus offloading the output computation from the CPU.

Single image detector 100 means that there is only one image detector 100 instead of two image detectors 100 such as an event camera and a monochrome or RGB camera as in the prior art.

Advantageously the only one image detector 100 of the present invention functions both as an image camera and as an event detector by means of the method 1000 explained below.

Some commercial cameras produce a signal that lacks the negative difference signal, making our approach more useful for event-like image reconstruction for Artificial Intelligence (AI) applications.

To recreate the differential signal from a frame-based image detector 100 as shown for example in figure 4 without using the process described in the prior art, the sensory device of the present invention employs a NPU instead of a CPU to perform the calculations, in order to achieve higher processing speed and lower power consumption.

The wearable sensory device of the present invention only needs one image detector 100 and an NPU.

Furthermore, using an NPU instead of a Digital Signal Processing (DSP), or instead of a CPU, gives more flexibility to the operation process for the sensory device, since it allows to adapt to all input sizes and to select the various thresholds in an efficient and user-friendly way.

This is achieved by using for example a neural network written in Python, with subsequent quantization and compilation of said neural network on the target NPU.

Meaning of quantization is a process of taking a neural network, which for example uses 32-bit floats to represent parameters, and instead converting it to use a smaller arithmetic, for example like 8-bit integers.

Alternatively it is possible to use any other programming language different from Python to achieve the same result.

As shown in figure 7 to perform the method 1000 to operate said wearable sensory device of the present invention, the method 1000 comprises an algorithm design phase 1200 that is performed by means of functions of a neural network built operation using an Open Neural Network Exchange (ONNX) framework (HYPERLINK: https://github.com/onnx/onnx).

ONNX provides definitions of an extensible computation graph model, built-in operators such as CLIP, SUB, CONV, ADD, CAST, SUB, CONCAT and standard data types, focused on inferencing (evaluation).

In order to perform all the steps of the method 1000 using a NPU, a neural network is created and then subsequently compiled for a target device by using ONNX as a framework, in order not to be dependent on any Artificial Intelligence AI framework and eventually convert said neural network in any other framework.

More generally NPU performs all the operations of algorithm 1200 as a convolutional neural network.

Preferably said neural network environment is ONNX.

Alternatively it is possible to use also other frameworks similar to ONNX in order to use NPU instead of CPU, but in the following the implementation example was done through ONNX.

Advantageously the network built operation provides to choose weights during the algorithm design phase 1200. Choosing the weights during the algorithm design phase 1200 differs from the prior art, in fact prior art teaches to choose the weights through training. Instead, in our solution, an output of the algorithm design phase 1200 is advantageously deterministic.

Deterministic means that network output is not dependent on any training process, but it is completely reproducible, in facts it does not depend on hyperparameters or optimizers used for training.

Said only one image detector 100 takes at least two consecutive images 201, 202, a first image 201 at first time and a second image 202 at a second time.

Preferably said second time is after the first time.

As shown in figure 7 the algorithm 1200 executed by NPU comprises an acquiring operation 1201 for acquiring two frame images at two different times, said first image Input1 201 at the first time and said second image Input2 202 at the second time.

Input1 201 and Input2 202 are two consecutive images of a frame size N by M pixels 10 acquired by the frame-based image detector 100, respectively acquired at the first time T1 and at the second time for example T2 > T1.

NPU reads N rows by M columns of pixels 10 in parallel way performing the acquiring operation 1201.

The algorithm 1200 executed by NPU comprises a subtracting operation 1202.

The subtracting operation 1202 is done after the acquiring operation 1201.

Said subtracting operation 1202 subtracts the first image from the second image:

Input2 - Input1

and obtain a differential image $I_{SUB}$ similar to that shown for example in figure 4.

NPU applies preceding operations 1201 and 1202 to N rows by M columns of pixels 10 in a parallel way.

For example in figure 7 it is shown that a SUB function of ONNX is applied by NPU. SUB applies a layer for creating the differential image $I_{SUB}$.

The algorithm 1200 executed by NPU comprises two operations named PATHs 1210 and 1220 for reconstruction of positive event-like image 32 and negative event-like image 31, respectively POSITIVE PATH 1210 and NEGATIVE PATH 1220. Both operating paths 1210, 1220 are explained in detail as follows.

Positive events 32 and negative events 31 are shown for example in figure 4, but the algorithm 1200 executed by NPU to obtain said positive events 32 and negative events 31 is different from that of the prior art because the two operations 1210 and 1220 are performed by NPU separately but in a parallel way.

Advantageously, NPU of the present invention does not perform things sequentially as done by CPU in prior art, but NPU does it in parallel for all the pixels 10 of the image, therefore NPU applies the operators of ONNX to most pixels of the image at the same time, thus parallelizing and speeding up the process, i.e. not in a sequential one a time way.

The POSITIVE PATH operation 1210 and the NEGATIVE PATH operation 1220 are operated by NPU in parallel way.

The POSITIVE PATH 1210 is an algorithm for reconstructing positive events 32 from the differential image shown for example in figure 4.

The POSITIVE PATH 1210 comprises a binarization operation 1211 wherein a differential image $I_{SUB}$ is binarized by assigning a value of 1 to pixels with an event whose value is above a threshold THpos and 0 otherwise, generating a binarized positive differential image $I_{bin+}$.

$$I_{bin+}(i,j) = \begin{cases} 1, & I_{SUB}(i,j) \geq THpos \\ 0, & otherwise \end{cases}$$

wherein i and j represents a position of a pixel 10 of the image on the frame of the image detector 100.

NPU applies the binarization operation 1211 to N rows by M columns of pixels 10 of said differential image in parallel way generating said binarized positive differential image $I_{bin+}$.

For example in figure 7 it is shown that CLIP function of ONNX is a first part of the binarization operation 1211, wherein the threshold THpos is fixed at 254. Pixels of the differential image $I_{SUB}$ with brightness values greater than 254 become 255, while pixels with brightness values lower or equal to 254 become 254. After the application of CLIP function, then a SUB function of ONNX is applied to the result of CLIP. SUB subtracts 254 from the result of CLIP and obtains the binarized image $I_{bin+}$ as explained above, wherein all the pixels can have only two values: 0 or 1.

The POSITIVE PATH 1210 comprises a convolution and thresholding operations 1212 wherein the binarized positive differential image $I_{bin+}$ is convolved with a kernel $K$ of size $k \times k$, wherein all weights are fixed to 1 and k is an odd number. For example when k=5, the kernel $K$ is defined as:

$$K = \begin{bmatrix} 1 & 1 & 1 & 1 & 1 \\ 1 & 1 & 1 & 1 & 1 \\ 1 & 1 & 1 & 1 & 1 \\ 1 & 1 & 1 & 1 & 1 \\ 1 & 1 & 1 & 1 & 1 \end{bmatrix}$$

The convolution between an image I and a generic matrix M of dimensions $k \times k$ is defined as:

$$(I * M)(i,j) = \sum_{m=-\frac{k-1}{2}}^{\frac{k-1}{2}} \sum_{n=-\frac{k-1}{2}}^{\frac{k-1}{2}} I(i+m, j+n) \cdot M(m,n)$$

wherein m and n represents respectively the number of columns and the number of rows of the matrix M that are being used to weight the pixels around the current one of indices i and j.

In image processing, a kernel or convolution matrix or mask is a small matrix used for blurring, sharpening, embossing, edge detection, and more. This is accomplished by doing a convolution between the kernel and an image. The result is a new image where each pixel is the weighted sum of the contents of itself and all its surrounding pixels in the original image. In case of a kernel with all "1", then all weights are 1, so the final contents of each cell of the new image is simply the sum of the context of the original surrounding pixels.

The convolution of the binarized image $I_{bin+}$ with the kernel $K$ defined above, will be a new matrix, where each pixel contains the sum of the elements of the binarized image $I_{bin+}$ in its neighbourhood of dimension $k \times k$.

If the value of a pixel of $I_{bin+}$ is greater than a threshold bond to the dimensions of the kernel $\frac{k \times k}{2}$, the median is 1, since all the pixels in the neighbourhood are 0 or 1. The complete operation for generating a positive event image named as $I_{POS}$ from $I_{bin+}$ through the kernel $K$ is defined as:

$$I_{\text{POS}}(i,j) = \begin{cases} 1, & (I_{bin+} * K)(i,j) > \dfrac{k \times k}{2} \\ 0, & otherwise \end{cases}$$

The convolution and thresholding operations 1212 is advantageously because it applies a non-linear filter to the image, which is a median filter.

More generally said convolution and threshold operations 1212 provide that said binarized positive differential image is convolved by NPU by applying a median filter in a parallel way, thus generating a convolved positive differential image.

It is emphasized that a combination of convolution, subtraction and the final clip layer is equivalent to the median filter.

After that, said convolved positive differential image is binarized by NPU by assigning a value of 1 to pixels with an event whose value is above a threshold bond with the dimensions of the kernel $\dfrac{k \times k}{2}$ , and 0 otherwise, thus generating a binarized convolved positive differential image.

Preferably convolution and thresholding operations 1212 is performed by NPU after binarization operation 1211.

In this specific case, the convolution applies a median filter to the binarized positive differential image.

More generally said convolution and threshold operations 1212 provides that said binarized positive differential image is convolved by NPU applying a median filter in a parallel way.

For example in figure 7 the convolution is obtained by applying the CONV function of ONNX to convolve the $I_{bin+}$ matrix with the kernel K with all 1 inside. A bias B equal to $-\dfrac{(k \times k)-1}{2}$ is selected for the convolution, so to achieve the aforementioned thresholding. In this way, all pixels with values higher than 1 (i.e. positive value) indicate that the median filter output is one. Then CLIP function of ONNX defines a threshold to binarize the result in a way that the pixels 10 of the resulting image can have only two values: 0 or 1. The CLIP layer is used for the final thresholding for the median filter.

The NEGATIVE PATH 1220 is an algorithm for reconstructing negative events 31 from the differential image shown for example in figure 4.

To generate negative events 31 from the unsigned differential image, the NEGATIVE PATH 1220 comprises a binarization operation 1221 that binarizes differential image $I_{SUB}$ by keeping the value 0 to pixels with a value of 0, while all other pixels are set to 1. The new image is called $I_{bin-}$.

$$I_{bin-}(i,j) = \begin{cases} 0, & I_{SUB}(i,j) = 0 \\ 1, & otherwise \end{cases}$$

For example in figure 7 the binarization operation 1221 is performed by CLIP function of ONNX.

The NEGATIVE PATH 1220 comprises a convolution and thresholding operations 1222, wherein $I_{bin-}$ is convolved with the same kernel K used for the POSITIVE PATH. The kernel K used for NEGATIVE PATH is not a median filter, but the background is removed by thresholding.

Similarly to the POSITIVE PATH, the output is a new image wherein each pixel value represents the sum of its neighborhood $k \times k$ pixels of the original image. If the value of the pixel of the convolution, at coordinates (i,j), is zero, it means that no pixel in its neighborhood has a positive value. Then it is possible to select a threshold THneg to accept pixels as negative events even if some elements in its neighbourhood are non-zero. The negative event image named $I_{NEG}$ is then defined as follows:

$$I_{NEG}(i,j) = \begin{cases} 0, & (I_{bin-} * K)(i,j) < THneg \\ 1, & otherwise \end{cases}$$

For example in figure 7 it is shown that the convolution and thresholding operations 1222 of the NEGATIVE PATH is performed by the NPU by apply CONV function of ONNX and CLIP function of ONNX. The CONV layer is used for the convolution of $I_{bin-}$ and the kernel K, in which the bias $B$ selected is 0. The CLIP layer is used for final thresholding.

Preferably convolution and thresholding operations 1222 is performed by NPU after binarization operation 1221.

More generally said NEGATIVE PATH operation 1220 comprises said binarization operation 1221 wherein said differential image is binarized by keeping a value of 0 to pixels with a negative event and 1 otherwise, generating a binarized negative differential image.

Said NPU applies the binarization operation 1221 to N rows by M columns of pixels 10 of said differential image in parallel way, said NEGATIVE PATH operation 1220 comprises said convolution and threshold operations 1222 provide that said binarized negative differential image is convolved by NPU by applying the same kernel matrix of POSITIVE PATH operation 1210 in a parallel way generating a convolved negative differential image. After that, said convolved negative differential image is binarized by NPU by assigning a value of 0 to pixels with an event whose value is below a threshold THneg bond with the dimensions of the kernel and 1 otherwise, generating a binarized convolved negative differential image.

POSITIVE PATH 1210 and NEGATIVE PATH 1220 of said algorithm design phase 1200 are performed at the same time, with all operations parallelized by NPU as shown in figure 7.

Said algorithm design phase 1200 comprises an addition operation 1230 wherein the two images: the image of negative events $I_{NEG}$ that is a result from the NEGATIVE PATH 1220 and the image of positive events $I_{POS}$ that is a result of the POSITIVE PATH 1210 are added together by NPU in parallel way, to obtain $I_{ADD}$ which is the event-like image obtained using said sensory device of the present invention.

$$I_{ADD} = I_{POS} + I_{NEG}$$

NPU applies the additional operation 1230 to N rows by M columns of pixels 10 in parallel way.

For example in figure 7 it is shown that NPU applies ADD function of ONNX then preferably CAST function of ONNX. The ADD layer is used for the addition of $I_{POS}$ and $I_{NEG}$ and the generation of $I_{ADD}$.

CAST function of ONNX is a function to change a value format: from integer to floating, i.e. it rescales the value on a different range of values.

It is not necessary to apply the CAST function, in fact in figure 7 the CAST function is always drawn with dashed lines to highlight that it is optional.

The final image $I_{ADD}$ is an event-like image and it will be a ternary image, that is, composed of three different possible values that represent: positive events 42, for example 2 as used in figure 6, negative events 41, for example 1 in figure 6, and no events 43, for example 0, as shown in figure 6.

Preferably said algorithm 1200 comprises a concatenate operation 1240 that concatenates the event-like image resulting from the addition operation 1230 with the image of Input2 202 of the only one image detector 100. Advantageously the operation of concatenating allows to use only one image detector 100 to have an event-like image and also to view the scene with the image of Input2 at real-time. The concatenate image is the result image 1250 of the algorithm 1200.

For example in figure 7 it is shown that the concatenate operation 1240 is performed by NPU by applying the final CONCAT function of ONNX, that is a layer is used to create an image that has in one channel the event-like information and in the other one the grayscale image (or alternatively the RGB image) acquired by the only single camera 100.

The concatenate operation 1240 concatenates said event-like image with the second image 202 and obtaining a result image 1250 which comprises in at least one channel event-like information and in the at least one other channel the image information.

In figure 7, the output of concatenate operation 1240 is represented as $1 \times 2 \times N \times M$, corresponding to 1 image of 2 channels (e.g. the greyscale image and the event-driven reconstructed map) of an array of $N \times M$ pixels.

NPU operates the concatenating operation 1240 in parallel way to develop a real-time image processing, i.e. obtaining the result image 1250 in real-time.

Alternatively said concatenate operation 1240 is not necessary.

Advantageously the method 1000 for operating the sensory device of the present invention has significant technical effects, as it allows to perform computationally complex operations, such as convolution, using hardware specifically designed for neural network inferences. In this way, the CPU is relieved from performing these operations, improving the overall efficiency of the system. In fact, an estimate of the

Multiply And Accumulate (MAC) instructions needed to perform a convolution is:

$$MAC = kernel\ numbers \times (k)^2 \times M \times N \times Input\ channels$$

So going to use plausible values such as number of Kernels = 1, kernel size (median filter sizing) k = 5; M × N = 1,000,000 (images from a 1 Mega pixels camera, i.e. only one image detector 100); input channels = 1, it is obtained

$$MAC = 25,000,000$$

for each convolution.

Knowing the number of MACs for each convolution it is possible to estimate the number of Floating Point Operations (FLOPs) needed:

$$FLOPs = 2 \cdot MAC = 50,000,000$$

Considering that two convolutions have to be executed sequentially (one for POSITIVE PATH and one for NEGATIVE PATH), it would mean 50,000,000 MACs (100 MFLOPs) for each execution of the network in CPU, without considering all auxiliary operations such as binarization and thresholding.

In contexts where computing power is limited, this could compromise the possibility of executing this algorithm 1200 in real-time.

The processing of an event is considered real-time if it occurs in a time shorter than the distance between events. For example, for a 30 fps camera, a real-time processing must take less than 33 ms (i.e. the inverse of 30fps).

Running the same method 1000 in NPU, wherein the various operations are parallelized and are optimized in terms of inference time and energy consumption, turns the camera frame-rate into the only bottleneck of the whole process, which must be high anyway to create a satisfactory differential image.

For this reason, the technical effect on the performance of wearable sensory device, wherein the computing unit of prior art is usually a microcontroller with limited computing power, is the possibility of unloading the CPU, so as to instantly perform the processing necessary to create an event-like image.

More generally and to summarize, said method 1000 to operate a wearable sensory device for real-time image processing comprises an algorithm design phase 1200.

Said sensory device comprises an image detector 100 and a Neural Processing Unit NPU.

Said image detector 100 takes at least two consecutive images 201, 202, a first image 201 and a second image 202.

Said NPU performs the method 1000.

The algorithm design phase 1200 comprises an acquiring operation 1201, wherein said acquiring operation 1201 acquires said at least two consecutive images 201, 202, wherein NPU reads said at least two consecutive images 201, 202 in parallel way.

The algorithm design phase 1200 comprises a subtracting operation 1202 which subtracts the first image 201 from the second image 202 and obtains a differential image, wherein NPU applies the subtracting operation 1202 in parallel way.

The algorithm design phase 1200 comprises a POSITIVE PATH operation 1210 which reconstructs a positive event-like image 32 from said differential image.

The algorithm design phase 1200 comprises a NEGATIVE PATH operation 1220 which reconstructs a negative event-like image 31 from said differential image.

Said NPU operates POSITIVE PATH operation 1210 and NEGATIVE PATH operation 1220 in parallel way.

The algorithm design phase 1200 comprises an addition operation 1230 which adds said negative event-like image 31 to positive event-like image 32 obtaining an event-like image, wherein NPU performs the adding operation 1230 in parallel way.

Preferably said algorithm design phase 1200 comprising said concatenate operation 1240 which concatenates said event-like image with the second image 202 and obtaining a result image 1250 which comprises in at least one channel the event-like information and in the at least one other channel the image information.

Advantageously the method 1000 for a wearable sensory device is more efficient, reducing average current consumption, increasing data processing speed, reducing computational operations by using a NPU, decreasing weight of the sensory device to be wearable because it is necessary only one image detector 100 to have both event-like image and a monochrome image (or RGB image).

More generally and to summarize, the wearable sensory device for real-time image processing according to the present invention comprises an image detector 100 and a Neural Processing Unit NPU.

The NPU is adapted to perform method 1000 for operating a wearable sensory device for real-time image processing described above.

Said image detector 100 is adapted to take at least two consecutive images 201, 202, a first image 201 and a second image 202.

Said sensory device is adapted to obtain an event-like image.

Advantageously the wearable sensory device is more efficient, reducing average current consumption, increasing data processing speed, reducing computational operations by using a NPU, decreasing weight of the sensory device to be wearable because it is necessary only one image detector 100 to have both event-like image and a monochrome image (or RGB image).

Advantageously the sensory device of the present invention allows to generate a two-channel image where the first is the image containing information on the motion of the objects using only one image detector 100, and the second is the grayscale image.

Preferably said wearable sensory device is an eyewear comprising only one monochrome or RGB colour camera as an image detector 100 and said NPU to perform the method 1000. Said image detector 100 functions both as an image camera and as an event detector by means of said method 1000.

Alternatively it is possible envisage that the image detector may be a depth camera or a Time of Flight camera or a thermal camera.

According to this alternative the images captured by said alternative image detectors do not record optical brightness on the matrix of NxM pixels, but record other data on the pixels, for example infrared cameras may record infrared brightness.

Alternatively the image detector 100 is a Time-of-Flight (TOF) camera (not shown in the figures), wherein each pixel 10 of the image detector 100 is composed of, for example, 1 byte representing the distance of the object's spot imaged by that pixel.

Alternatively the image detector 100 is a thermal camera (not shown in the figures), wherein each pixel 10 of the image detector 100 is composed of, for example, 1 byte representing the local temperature of the object's spot imaged by that pixel.

Alternatively the wearable sensory device may comprise another image detector 100, but method 1000 needs only one image detector 100 to function.

Alternatively said wearable sensory device is mounted with a head mounted device.

Advantageously the head mounted device suitable for mounting said wearable sensory device is more efficient, reducing average current consumption, increasing data processing speed, reducing computational operations by using a NPU, decreasing weight of the sensory device to be wearable because it is necessary only one image detector 100 to have both event-like image and a monochrome image (or RGB image).

The invention thus conceived is susceptible to many modifications and variants, as long as they fall within the scope of the claims.

**Claims**

1. Method (1000) to operate a wearable sensory device for real-time image processing,

   wherein said sensory device comprises an image detector (100) and a Neural Processing Unit (NPU),
   wherein said image detector (100) takes at least two consecutive images (201, 202), a first image (201) and a second image (202),
   wherein the method (1000) is performed by NPU and comprises an algorithm design phase (1200) comprising an acquiring operation (1201), wherein said acquiring operation (1201) acquires said at least two consecutive images (201, 202),
   a subtracting operation (1202) which subtracts the first image (201) from the second image (202) and obtains a differential image,
   a POSITIVE PATH operation (1210) which reconstructs a positive event-like image (32) from said differential image,
   a NEGATIVE PATH operation (1220) which reconstructs a negative event-like image (31) from said differential image,
   an addition operation (1230) which adds said negative event-like image (31) to positive event-like image (32) obtaining an event-like image.

2. Method (1000) according to claim 1, **characterized in that** the algorithm design phase (1200) comprises a concatenate operation (1240) which concatenates said event-like image with the second image (202) and obtaining a result image (1250) which comprises in at least one channel the event-like information and in the at least one other channel the image information.

3. Method (1000) according to one or more of anyone of the preceding claims, **characterized in that** said image detector (100) is only one.

4. Method (1000) according to one or more of anyone of the preceding claims, **characterized in that** said image detector (100) is a monochrome camera or an RGB colour camera or a depth camera or a Time of Flight camera or a thermal camera.

5. Method (1000) according to one or more of anyone of the preceding claims, **characterized in that** said POSITIVE PATH operation (1210) comprises

   a binarization operation (1211) wherein said differential image is binarized by assigning a value of 1 to pixels 10 of said image detector (100) with an event whose value is above a threshold THpos and 0 otherwise, generating a binarized positive differential image,

a convolution and threshold operations (1212) provide that said binarized positive differential image is convolved by NPU by applying a median filter generating a convolved positive differential image,

then said convolved positive differential image is binarized by NPU by assigning a value of 1 to pixels with an event whose value is above a threshold bond with the dimensions of the kernel and 0 otherwise, generating a binarized convolved positive differential image.

6. Method (1000) according to one or more of anyone of the preceding claims, **characterized in that** said NEGATIVE PATH operation (1220) comprises

a binarization operation (1221) wherein said differential image is binarized by keeping a value of 0 to pixels with an event whose value is 0 and 1 otherwise, generating a binarized negative differential image, wherein said NPU applies the binarization operation (1221) to said differential image in parallel way,

a convolution and threshold operations (1222) provide that said binarized negative differential image is convolved by NPU by applying the same kernel matrix of POSITIVE PATH operation (1210) in a parallel way generating a convolved negative differential image,

then said convolved negative differential image is binarized by NPU by assigning a value of 0 to pixels with an event whose value is below a threshold THneg bond with the dimensions of the kernel and 1 otherwise, generating a binarized convolved negative differential image.

7. Wearable sensory device for real-time image processing, **characterized in that** said sensory device comprises an image detector (100) and a Neural Processing Unit (NPU), wherein NPU is adapted to perform a method (1000) for operating a wearable sensory device for real-time image processing comprising an algorithm design phase (1200),

wherein said image detector (100) is adapted to take at least two consecutive images (201, 202), a first image (201) and a second image (202),

wherein said NPU is adapted to perform an acquiring operation (1201) of the algorithm design phase (1200) wherein said NPU acquires said at least two consecutive images (201, 202),

wherein said NPU is adapted to perform a subtracting operation (1202) wherein said NPU subtracts the first image (201) from the second image (202) and obtains a differential image,

wherein said NPU is adapted to perform a POSITIVE PATH operation (1210) wherein said NPU reconstructs a positive event-like image (32) from said differential image,

wherein said NPU is adapted to perform a NEGATIVE PATH operation (1220) wherein said NPU reconstructs a negative event-like image (31) from said differential image,

wherein said NPU is adapted to perform an addition operation (1230) wherein said NPU adds said negative event-like image (31) to positive event-like image (32) obtaining an event-like image.

8. Wearable sensory device according to claim 7, **characterized in that** said NPU is adapted to perform a concatenate operation (1240) wherein said NPU concatenates said event-like image with the second image (202) and obtaining a result image (1250) which comprises in at least one channel the event-like information and in the at least one other channel the image information.

9. Wearable sensory device according to one or more of anyone of the claims 7 or 8, **characterized in that** said image detector (100) is only one.

10. Wearable sensory device according to one or more of anyone of the claims 7-9, **characterized in that** said image detector (100) is a monochrome camera or a RGB colour camera or a depth camera or a Time of Flight camera or a thermal camera.

11. Wearable sensory device according to one or more of anyone of the claims 7-10, **characterized in**

**that** said NPU is adapted to perform a binarization operation (1211) of said POSITIVE PATH operation (1210) wherein NPU binarizes said differential image by assigning a value of 1 to pixels 10 of said image detector (100) with an event whose value is above a threshold THpos and 0 otherwise, generating a binarized positive differential image,

**that** said NPU is adapted to perform a convolution and threshold operations (1212) of said POSITIVE PATH operation (1210) wherein said NPU convolves said binarized positive differential image by applying a median filter generating a convolved positive differential image,

then said NPU binarizes said convolved positive differential image by assigning a value of 1 to pixels with an event whose value is above a threshold bond with the dimensions of the kernel and 0 otherwise, generating a binarized convolved positive differential image.

12. Wearable sensory device according to one or more of anyone of the claims 7-11, **characterized in**

**that** said NPU is adapted to perform a binarization operation (1221) of said NEGATIVE PATH operation (1220), wherein said NPU binarizes said differential image by keeping a value of 0 to pixels with an event whose value is 0 and 1 otherwise, generating a binarized negative differential image, wherein said NPU applies the binarization operation (1221) to said differential image in parallel way,

**that** said NPU is adapted to perform a convolution and threshold operations (1222) of said NEGATIVE PATH operation (1220), wherein said NPU convolves said binarized negative differential image by applying the same kernel matrix of POSITIVE PATH operation (1210) in a parallel way generating a convolved negative differential image,

then said NPU binarizes said convolved negative differential image by assigning a value of 0 to pixels with an event whose value is below a threshold THneg bond with the dimensions of the kernel and 1 otherwise, generating a binarized convolved negative differential image.

13. Head mounted device suitable to mount a wearable sensory device for real-time image processing, **characterized in that** said sensory device comprises an image detector (100) and a Neural Processing Unit (NPU), wherein NPU is adapted to perform a method (1000) for operating a wearable sensory device for real-time image processing comprising an algorithm design phase (1200),

wherein said image detector (100) is adapted to take at least two consecutive images (201, 202), a first image (201) and a second image (202),

wherein said NPU is adapted to perform an acquiring operation (1201) of the algorithm design phase (1200) wherein said NPU acquires said at least two consecutive images (201, 202),

wherein said NPU is adapted to perform a subtracting operation (1202) wherein said NPU subtracts the first image (201) from the second image (202) and obtains a differential image,

wherein said NPU is adapted to perform a POSITIVE PATH operation (1210) wherein said NPU reconstructs a positive event-like image (32) from said differential image,

wherein said NPU is adapted to perform a NEGATIVE PATH operation (1220) wherein said NPU reconstructs a negative event-like image (31) from said differential image,

wherein said NPU is adapted to perform an addition operation (1230) wherein said NPU adds said negative event-like image (31) to positive event-like image (32) obtaining an event-like image.

14. Head mounted device according to claim 13, **characterized in that** said NPU is adapted to perform a concatenate operation (1240) wherein said NPU concatenates said event-like image with the second image (202) and obtaining a result image (1250) which comprises in at least one channel the event-like information and in the at least one other channel the image information

15. Head mounted device according to one or more of anyone of the claims 13 or 14, **characterized in that** said image detector (100) is only one.

16. Head mounted device according to one or more of anyone of the claims 13-15, **characterized in that** said image detector (100) is a monochrome camera or a RGB colour camera or a depth camera or a Time of Flight camera or a thermal camera.

17. Head mounted device according to one or more of anyone of the claims 13-16, **characterized in**

**that** said NPU is. adapted to perform a binarization operation (1211) of said POSITIVE PATH operation (1210) wherein NPU binarizes said differential image by assigning a value of 1 to pixels 10 of said image detector (100) with an event whose value is above a threshold THpos and 0 otherwise, generating a binarized positive differential image,

**that** said NPU is adapted to perform a convolution and threshold operations (1212) of said POSITIVE PATH operation (1210) wherein said NPU convolves said binarized positive differential image by applying a median filter generating a convolved positive differential image,

then said NPU binarizes said convolved positive differential image by assigning a value of 1 to pixels with an event whose value is above a threshold bond with the dimensions of the kernel and 0 otherwise, generating a binarized convolved positive differential image.

18. Head mounted device according to one or more of anyone of the claims 13-17, **characterized in**

**that** said NPU is adapted to perform a binarization operation (1221) of said NEGATIVE PATH operation (1220), wherein said NPU binarizes said differential image by keeping a value of 0 to pixels with an event whose value is 0 and 1 otherwise, generating a binarized negative differential image, wherein said NPU applies the binarization operation (1221) to said differential image in parallel way,

**that** said NPU is adapted to perform a convolution and threshold operations (1222) of said NEGATIVE PATH operation (1220), wherein said NPU convolves said binarized negative differential image by applying the same kernel matrix of POSITIVE PATH operation (1210) in a parallel way generating a convolved negative differential image,

then said NPU binarizes said convolved negative differential image by assigning a value of 0 to pixels with an event whose value is below a threshold THneg bond with the dimensions of the kernel and 1 otherwise, generating a binarized convolved negative differential image.

Fig. 1

Fig. 2

Fig. 3

Fig. 4

Fig. 5

Fig. 6

Fig. 7

| | Europäisches Patentamt European Patent Office Office européen des brevets | **EUROPEAN SEARCH REPORT** | **Application Number** EP 24 42 5054 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 570 249 A (INST AUTOMATION CAS) 30 August 2024 (2024-08-30) * paragraph [0035] - paragraph [0158] * ----- | 1-18 | INV. G06T7/254 |
| A | CN 117 876 927 A (SHANGHAI AEROSPACE CONTROL TECH INST) 12 April 2024 (2024-04-12) * paragraph [0054] - paragraph [0091] * ----- | 1-18 | |
| A | WO 2024/078032 A1 (HUAWEI TECH CO LTD [CN]) 18 April 2024 (2024-04-18) * page 1 - page 3 * ----- | 1-18 | |

| | | | TECHNICAL FIELDS SEARCHED (IPC) |
|---|---|---|---|
| | | | G06T |

The present search report has been drawn up for all claims

| Place of search | Date of completion of the search | Examiner |
|---|---|---|
| Munich | 30 April 2025 | Maier, Werner |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 42 5054

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | | Publication date | Patent family member(s) | | Publication date |
|---|---|---|---|---|---|
| CN 118570249 | A | 30-08-2024 | NONE | | |
| CN 117876927 | A | 12-04-2024 | NONE | | |
| WO 2024078032 | A1 | 18-04-2024 | CN | 117893856 A | 16-04-2024 |
| | | | WO | 2024078032 A1 | 18-04-2024 |

EPO FORM P0459

For more details about this annex : see Official Journal of the European Patent Office, No. 12/82